# EUROPEAN PATENT APPLICATION

(11) **EP 4 628 223 A1**
(43) Date of publication of application: **08.10.2025**
(21) Application number: 23897272.3
(22) Date of filing: 12.10.2023
(51) Int. Cl.: B05C 5/02, B05D 1/26

(54) **COATING DEVICE**

(30) Priority: 28.11.2022 JP 2022189259
(71) Applicant: Panasonic Energy Co., Ltd., Osaka 570-8511 (JP)
(72) Inventor: WAKIYA Keisuke, Kadoma-shi, Osaka 571-0057 (JP); AKIMOTO Yudai, Kadoma-shi, Osaka 571-0057 (JP)
(74) Representative: Novagraaf International SA
(86) International application number: PCT/JP2023/037060
(87) International publication number: WO 2024/116613

(57) **Abstract**

A disclosed coating device 10 includes: a die head 20 having a discharge port for discharging a slurry 90 to a base material 80, the discharge port extending in a first horizontal direction D1; and a plurality of functional units 31 and 32 spaced apart from each other in the first horizontal direction D1. Each of the functional units 31 and 32 can be switched to exhibit either one of a fixing function for fixing the die head 20 to a base and a deforming function for deforming the die head 20 in a second horizontal direction D2 orthogonal to the first horizontal direction D1. Some of the functional units 31 are configured to exhibit the fixing function, and the remaining functional unit or units 32 are configured to exhibit the deforming function. Thus, clearance control can be easily performed.

## Description

### [Technical Field]

The present disclosure relates to a coating device.

### [Background Art]

Conventionally, a coating device for applying a coating liquid to a base material has been known (e.g., Patent Literature 1). The coating device of Patent Literature 1 includes: a frame; a die that is supported by the frame, and that applies a coating liquid from a tip lip to a base material; and a screw member that is disposed between a die back surface portion and a frame support portion facing thereto, and that controls a clearance between the tip lip and the base material by changing a distance between the die back surface portion and the frame support portion. This clearance control is performed for making uniform the thickness of a coating film formed on the base material.

### [Citation List]

### [Patent Literature]

Patent Literature 1: Japanese Laid-Open Patent Publication No. 2004-321915

### [Summary of Invention]

### [Technical Problem]

In the coating device of Patent Literature 1, however, the above clearance control cannot be easily performed. This is because, in this coating device, when clearance control with one screw member is performed, the clearance at the position where another screw member (esp., a screw member adjacent to the one screw member) is disposed is influenced via the frame support portion. That is, due to the mutual interference between the actions of the respective screw members, the clearance control over the entire tip lip of the die cannot be easily performed. Under such circumstances, one of the objectives of the present disclosure is to easily perform clearance control.

### [Solution to Problem]

One aspect according to the present disclosure relates to a coating device. The coating device includes: a die head having a discharge port for discharging a slurry to a base material, the discharge port extending in a first horizontal direction; and a plurality of functional units spaced apart from each other in the first horizontal direction, wherein each of the functional units can be switched to exhibit either one of a fixing function for fixing the die head to a base and a deforming function for deforming the die head in a second horizontal direction orthogonal to the first horizontal direction, some of the functional units are configured to exhibit the fixing function, and the remaining functional unit or units are configured to exhibit the deforming function.

Another aspect according to the present disclosure relates to a coating device. The coating device includes: a die head having a discharge port extending in a first horizontal direction; at least one fixing unit that is attached to a back surface of the die head, and that fixes the die head to the base; and at least one deforming unit that is attached to the die head, and that is spaced apart from the fixing unit in the first horizontal direction, wherein the deforming unit is configured to deform the die head in a second horizontal direction orthogonal to the first horizontal direction.

### [Advantageous Effects of Invention]

According to the present disclosure, it is possible to easily perform clearance control.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic oblique view illustrating a coating device according to Embodiment 1 and a base material transported by a roll.
[FIG. 2] An exploded oblique view of the coating device.
[FIG. 3] A sectional view of the coating device in a cross section passing through a deforming functional unit.
[FIG. 4] A plan view illustrating a state before and after clearance control, in which a central portion of a coating film of a slurry is relatively thick before the clearance control.
[FIG. 5] A plan view illustrating a state before and after clearance control, in which a central portion of a coating film of a slurry is relatively thin before the clearance control.
[FIG. 6] A plan view illustrating a state before and after clearance control, in which a central portion of a coating film of a slurry is getting thicker from one end to the other end before the clearance control.
[FIG. 7] A schematic oblique view illustrating a coating device according to Embodiment 2.

### [Description of Embodiments]

Embodiments of a coating device according to the present disclosure will be described below by way of examples. The present disclosure, however, is not limited to the examples described below. In the following description, specific numerical values and materials are exemplified in some cases, but other numerical values and other materials may be adopted as long as the effects of the present disclosure can be obtained.

A coating device according to one embodiment of the present disclosure (hereinafter, sometimes referred to as a coating device A) is a device for applying a slurry (e.g. an electrode mixture slurry) to a base material (e.g. a current collector of a battery), to form a coating film. The coating device A includes a die head and a plurality of functional units.

The die head has a discharge port for discharging a slurry to the base material. The discharge port extends in a first horizontal direction. The base material may have a belt-like shape (or a long sheet shape) and may be transported along its longitudinal direction in the vicinity of the discharge port. The first horizontal direction may coincide with the width direction of the base material to be transported. A slurry is continuously applied to the surface of the base material transported in the vicinity of the discharge port, so that a coating film can be formed. The die head may be constituted of an iron-based material (e.g. stainless steel).

The plurality of functional units are spaced apart from each other in the first horizontal direction. That is, the plurality of functional units are provided independently of each other. Each of the functional units can be switched to exhibit either one of a fixing function for fixing the die head to a base and a deforming function for deforming the die head in a second horizontal direction orthogonal to the first horizontal direction. Some of the functional units are configured to exhibit the fixing function. Accordingly, the die head is fixed to the base. The base may be made of an iron-based material (e.g. stainless steel). The remaining functional unit or units are configured to exhibit the deforming function. Accordingly, of the die head, a portion corresponding to this functional unit is deformed in the second horizontal direction, and along with this, the discharge port is also partially deformed in the second horizontal direction. At a portion that deforms in the second horizontal direction of the discharge port, the distance (hereinafter, sometimes referred to as the clearance) between the base material and the discharge port changes. That is, by using a functional unit that exhibits the deforming function (hereinafter, sometimes referred to as a deforming functional unit), the clearance control of the coating device A can be performed. Furthermore, since the respective functional units are provided independently of each other as mentioned above, the deforming action by one deforming functional unit is unlikely to influence the clearance at the position where another functional unit (esp., another deforming functional unit) is disposed. Therefore, the clearance control of the coating device A can be easily performed.

The die head may have an upper block and a lower block that are fixed to each other. The functional units may be provided on at least one of the upper block and the lower block. In other words, the functional units may be provided only on the upper block, may be provided only on the lower block, and may be provided on both the upper block and the lower block. As described above, the disposing position can be flexibly set as necessary.

The functional unit (deforming functional unit) that exhibits the deforming function may deform the die head by pushing the back surface of the die head. Here, the back surface of the die head refers to a surface opposite to the discharge port. By pushing the back surface of the die head, the die head can be deformed in a simple form.

Each of the functional units may have a die base that is fixed to the base, and that includes a vertical wall portion provided with a first screw hole and a first long hole. The functional unit that exhibits the fixing function (hereinafter, sometimes referred to as the fixing functional unit) may further include a fixing screw that is screwed via the first long hole into a second screw hole formed on the back surface of the die head. The functional unit that exhibits the deforming function (deforming functional unit) may further have a set screw that is screwed into the first screw hole, and that pushes the back surface of the die head. The die base may be screw-fixed to the base. In the vertical wall portion of the die base, a first screw hole may be formed in the central portion thereof, and a first long hole may be formed on each of both sides of the screw hole. In the fixing functional unit, since the fixing screw is inserted into the first long hole and is screwed into the second screw hole, a displacement of each element in the longitudinal direction of the first long hole can be permitted. In the deforming functional unit, the set screw deforms the above die head in the second horizontal direction by pushing the back surface of the die head.

The set screw may be a fine thread screw. Accordingly, the deformation amount of the die head relative to the rotation amount of the set screw is suppressed small. Therefore, the clearance control can be performed more precisely. The set screw may be a fine screw.

The functional unit may further include a plate provided between the die base and the back surface of the die head. The set screw may push the back surface of the die head via the plate. Here, when the set screw directly pushes the back surface of the die head, the back surface of the die head may be scratched. On the other hand, the set screw of this configuration indirectly pushes the back surface of the die head via the plate, so that the back surface of the die head is less likely to be scratched. In addition, the back surface of the die head, when pushed via the plate, is pushed over a wider area, as compared to when pushed with the tip of the set screw. Thus, the deformation of the die head becomes gentle, and the dimension distribution of the clearance in the first horizontal direction can be made gentle. Along with this, the thickness distribution of the coating film formed on the surface of the base material becomes gentle. This is preferable from the viewpoint that local irregularities are unlikely to be formed in the thickness of the coating film.

The set screw may push the central portion in the first horizontal direction of the plate. Accordingly, the force from the set screw can be transmitted approximately uniformly over the entire contact region between the plate and the back surface of the die head. The central portion may be a region including the midpoint in the first horizontal direction of the plate.

The constituent material of the plate may have a higher Vickers hardness than the constituent material of the die head. For example, when the constituent material of the die head is an iron-based material, the constituent material of the plate may be a cemented carbide. This can avoid the breakage of the plate when pushing the plate with the set screw. The Vickers hardness may be measured by, for example, a measurement method specified in JIS 2244-1.

The plate may have a second long hole that is formed at a position overlapping the first long hole, and that has a dimension in the first horizontal direction which is longer than the first long hole. The fixing screw may be screwed into the second screw hole via the first long hole and the second long hole. In this configuration, even when a displacement of the plate occurs in the first horizontal direction, the edge of the second long hole is unlikely to interfere with the fixing screw. Therefore, in the fixing functional unit, the displacement of the plate is likely to be permitted.

In the first horizontal direction, the dimension of the discharge port may be 90% or more of the dimension of the die head. With such a wide discharge port, the slurry can be continuously applied to the wide base material. However, as the discharge port becomes wider, the clearance in its width direction (first horizontal direction) tend to have variations, leading to increased necessity of the clearance control. On the other hand, the coating device A can easily perform the clearance control as described above, and therefore, is useful especially when using a die head provided with a wide discharge port. The dimension of the discharge port may be, preferably, 650 mm or more.

A coating device according to another embodiment of the present disclosure (hereinafter, referred to as a coating device B) is a device for applying a slurry (e.g. an electrode mixture slurry) to a base material (e.g. a current collector of a battery), to form a coating film. The coating device B includes a die head, at least one fixing unit, and at least one deforming unit.

The die head may be similar to that of the coating device A.

At least one fixing unit is attached to the back surface of the die head and fixes the die head to the base. The fixing unit may be similar to the fixing functional unit of the coating device A.

At least one deforming unit is attached to the die head and is spaced apart from the fixing unit in the first horizontal direction. That is, the deforming unit is independently provided from the fixing unit. The deforming unit is configured to deform the die head in a second horizontal direction orthogonal to the first horizontal direction. Accordingly, the portion of the die head corresponding to the deforming unit is deformed in the second horizontal direction, and along with this, the discharge port is also partially deformed in the second horizontal direction. Since such a deforming unit is spaced apart from the fixing unit, the clearance control can be easily performed as in the case of the coating device A. The deforming unit may have a rod fixed to the die head. When two or more deforming units are present, the deforming units may be spaced apart from each other. The deforming units may be disposed more outward than the fixing unit in the first horizontal direction, or may be disposed more inward.

As described above, according to the present disclosure, by providing the respective units independently of each other, the interference between them can be suppressed, and the clearance control can be easily performed.

In the following, examples of the coating device according to the present disclosure will be specifically described with reference to the drawings. To the components and processes of the below-described examples of the coating device, the components and processes as described above can be applied. The components and processes of the below-described examples of the coating device can be modified based on the description above. The matters as described below may be applied to the above embodiments. Of the components and processes of the below-described examples of the coating device, the components and processes which are not essential to the coating device according to the present disclosure may be omitted. The figures below are schematic and not intended to accurately reflect the shape and the number of the actual members.

### <<Embodiment 1>>

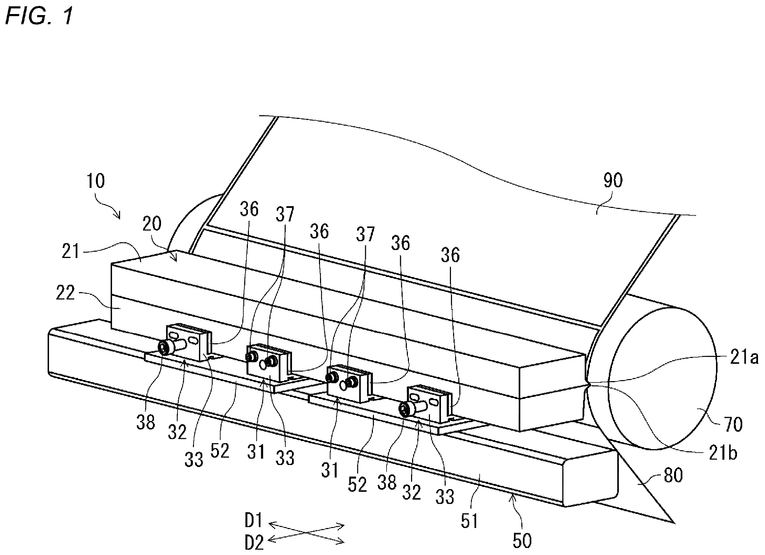

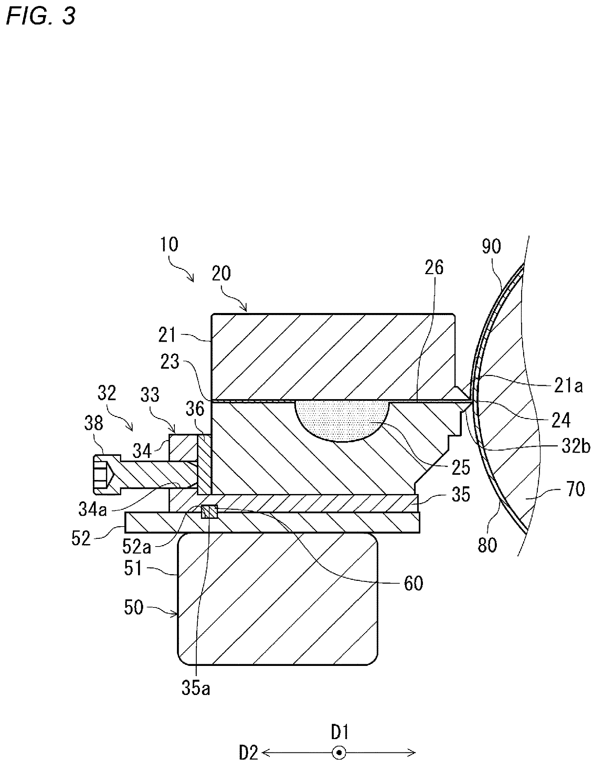

Embodiment 1 of the present disclosure will be described. A coating device 10 according to the present embodiment is a device for applying a slurry to a base material, to form a coating film. The coating device 10 includes, as illustrated in FIGS. 1 to 3, a die head 20 and a plurality of functional units 31 and 32. The die head 20 is fixed to a base 50 by some of the functional units 31, as described later. The base 50 includes a base body 51 which is positionally fixed, and at least one (two, in this example) base plate 52 fixed to the base body 51.

The die head 20 includes an upper block 21 and a lower block 22 fixed to each other, and a shim 23 attached therebetween. The upper block 21 and the lower block 22 have tip lips 21a and 22a, respectively. A discharge port 24 extending in a first horizontal direction D1 is formed between the tip lips 21a and 22a. In the first horizontal direction D1, the dimension of the discharge port 24 is 90% or more of the dimension of the die head 20.

Inside the die head 20, a manifold 25 to which a slurry 90 is supplied from a slurry supply means (not illustrated), and a communication path 26 for communicating the manifold 25 and the discharge port 24 with each other is formed. The vertical dimension of the communication path 26 is defined by the thickness dimension of the shim 23. In the die head 20, the slurry 90 supplied from the slurry supply means is accumulated in the manifold 25 and, through the communication path 26, discharged from the discharge port 24 to a belt-shaped base material 80 transported by a roll 70. In this way, a coating film of the slurry 90 can be continuously formed on the surface of the base material 80.

The plurality of (four, in this example) functional units 31 and 32 are provided on the lower block 22, with spaced apart from each other in the first horizontal direction D1. Each of the functional units 31 and 32 can be switched to exhibit either one of a fixing function for fixing the die head 20 to the base 50 and a deforming function for deforming the die head 20 in a second horizontal direction D2 orthogonal to the first horizontal direction D1 (i.e. the opposing direction of the die head 20 and the base material 80). Some of the functional units 31 (two functional units 31 on the central side, in the illustrated example) are configured to exhibit the fixing function. The remaining functional unit or units (two functional units 32 on the outer side, in the illustrated example) are configured to exhibit the deforming function.

The functional unit 31 (hereinafter, sometimes referred to as the fixing functional unit 31) that exhibits the fixing function includes a die base 33, at least one (one, in this example) plate 36, and at least one (two, in this example) fixing screw 37.

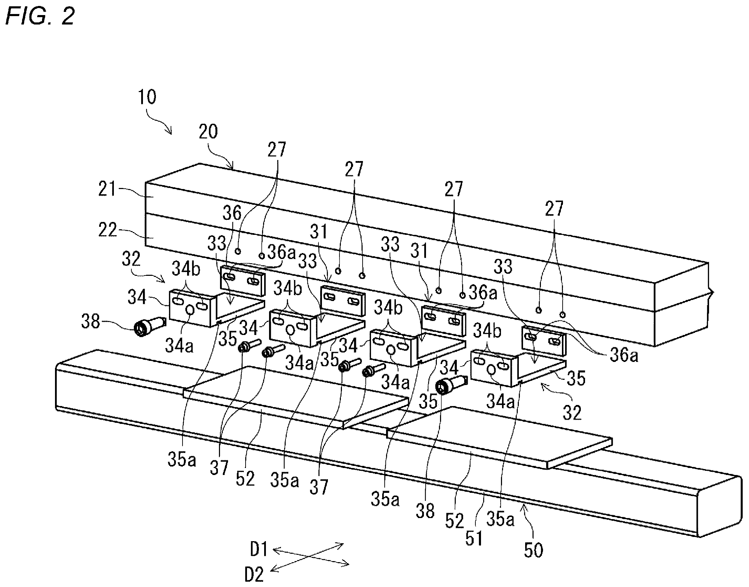

The die base 33 includes: a vertical wall portion 34 provided with at least one (one, in this example) first screw hole 34a and at least one (two, in this example) first long hole 34b; and a lateral plate portion 35 integrally formed with the vertical wall portion 34. The die base 33 may be screw-fixed to the base plate 52 of the base 50 via a through-hole (not shown) formed in the lateral plate portion 35. On the lower surface of the lateral plate portion 35, a first key groove 35a is formed. On the upper surface of the base plate 52, a second key groove 52a (illustration omitted in FIG. 2) is formed at a position facing the first key groove 35a. By inserting a key 60 into the first key groove 35a and the second key groove 52a, the die base 33 can be positioned relative to the base 50.

A plate 36 is provided between the vertical wall portion 34 of the die base 33 and the back surface of the die head 20. The constituent material of the plate 36 has a higher Vickers hardness than the constituent material of the die head 20. The plate 36 has a second long hole 36a formed at a position overlapping the first long hole 34b of the die base 33. In the first horizontal direction D1, the dimension of the second long hole 36a is longer than the dimension of the first long hole 34b.

Each of the fixing screws 37 is screwed, through the first long hole 34b and the second long hole 36a, into a second screw hole 27 formed on the back surface of the die head 20. Thus, the die head 20 can be fixed to the base 50 via the fixing functional unit 31.

The functional unit 32 that exhibits the deforming function (hereinafter, sometimes referred to as the deforming functional unit 32) includes a die base 33, at least one (one, in this example) plate 36, and at least one (one, in this example) set screw 38.

The die base 33 and the plate 36 are the same as the die base 33 and the plate 36 of the fixing functional unit 31.

The set screw 38 is constituted of a fine thread screw. The set screw 38 is screwed into the first screw hole 34a, and pushes the central portion in the first horizontal direction D1 of the plate 36, thereby to push the back surface of the die head 20. Specifically, by screwing the set screw 38 into the first screw hole 34a (by moving the set screw 38 toward the discharge port 24), the back surface of the die head 20 is pushed via the plate 36. This deforms a portion of the die head 20 where the deforming functional unit 32 is disposed, toward the base material 80, and along with this deformation, the clearance in that portion (i.e., the distance between the base material 80 and the discharge port 24) decreases. On the other hand, by moving the set screw 38 in the reverse direction, the deformation of a portion of the die head 20 where the deforming functional unit 32 is disposed can be kept small until the pushing force by the set screw 38 is released, and this increases the clearance in that portion.

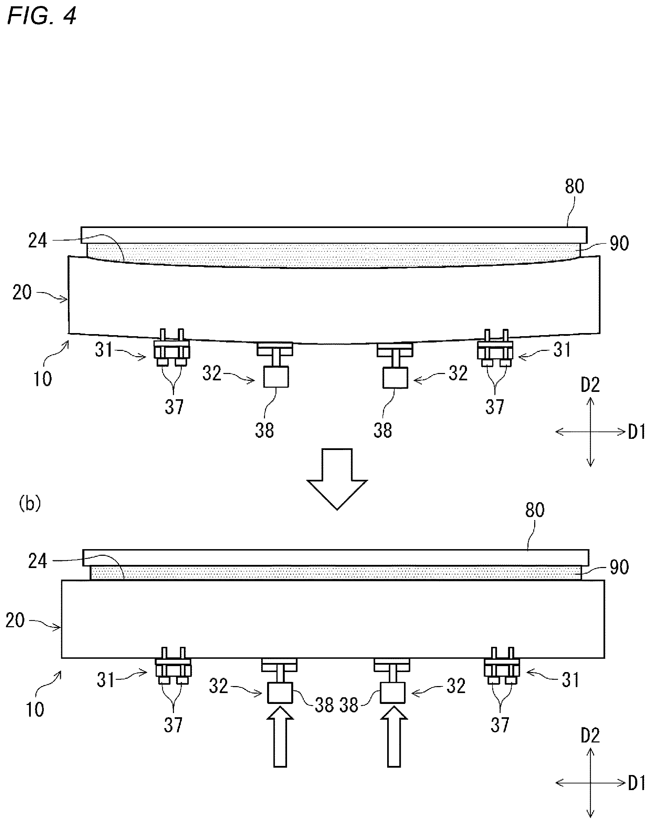

Next, a description will be given of an example of a method for making the thickness uniform using the coating device 10 according to the present embodiment when the thickness of the coating film of the slurry 90 is not uniform, with reference to FIGS. 4 to 6. Note that the thickness of the coating film may be measured by a thickness meter (not illustrated).

FIG. 4 is a diagram illustrating a state before and after the clearance is controlled through the deformation of the die head 20, in which the central portion of the coating film of the slurry 90 is relatively thick before the clearance control. In this case, of the four functional units 31 and 32, two functional units 32 on the central side are switched to the deforming functional unit 32, and two functional units 31 on the outer side are switched to the fixing functional unit 31. Then, by pushing the back surface of the die head 20 with the set screw 38 of each deforming functional unit 32, the shape of the tip lips 21a and 22a is straightened. As a result, the clearance can be made uniform throughout, and the thickness of the coating film of the slurry 90 can also be made uniform.

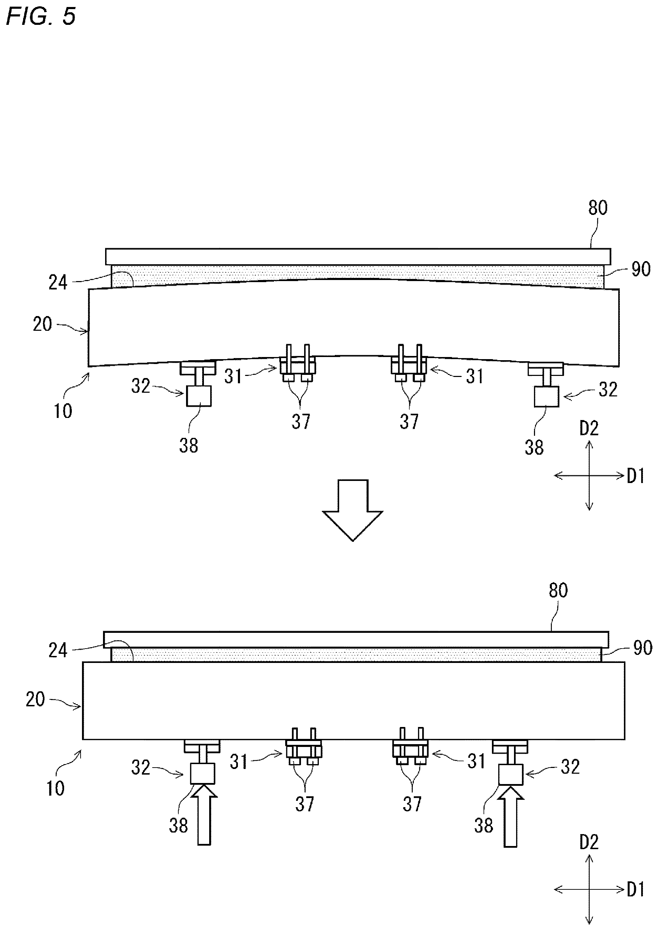

FIG. 5 is a diagram illustrating a state before and after the clearance is controlled through the deformation of the die head 20, in which the central portion of the coating film of the slurry 90 is relatively thin before the clearance control. In this case, of the four functional units 31 and 32, two functional units 32 on the outer side are switched to the deforming functional unit 32, and two functional units 31 on the central side are switched to the fixing functional unit 31. Then, by pushing the back surface of the die head 20 with the set screw 38 of each deforming functional unit 32, the shape of the tip lips 21a and 22a is straightened. As a result, the clearance can be made uniform throughout, and the thickness of the coating film of the slurry 90 can also be made uniform.

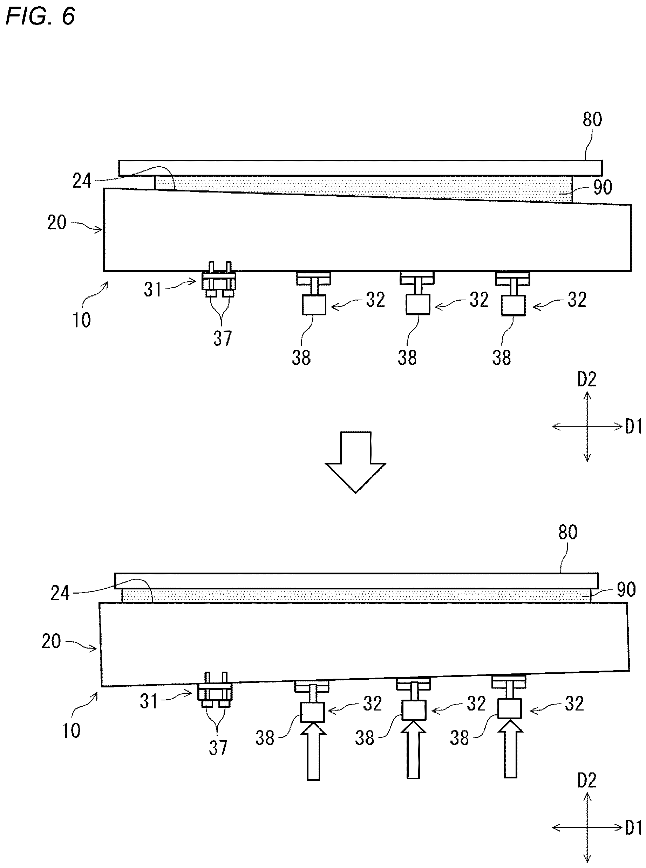

FIG. 6 is a diagram illustrating a state before and after the clearance is controlled through the deformation of the die head 20, in which the coating film of the slurry 90 is getting thicker from one end (the left end in FIG. 6) to the other end before the clearance control. In this case, of the four functional units 31 and 32, three functional units 32 on the other end side are switched to the deforming functional unit 32, and one functional unit 31 on one end side is switched to the fixing functional unit 31. Then, by pushing the back surface of the die head 20 with the set screw 38 of each deforming functional unit 32, the shape of the tip lips 21a and 22a is straightened. As a result, the clearance can be made uniform throughout, and the thickness of the coating film of the slurry 90 can also be made uniform.

### <<Embodiment 2>>

Embodiment 2 of the present disclosure will be described. The coating device 10 according to the present embodiment differs from the above Embodiment 1 in that a fixing unit 41 and a deforming unit 42 are included. Hereinafter, the points different from the above Embodiment 1 will be mainly described.

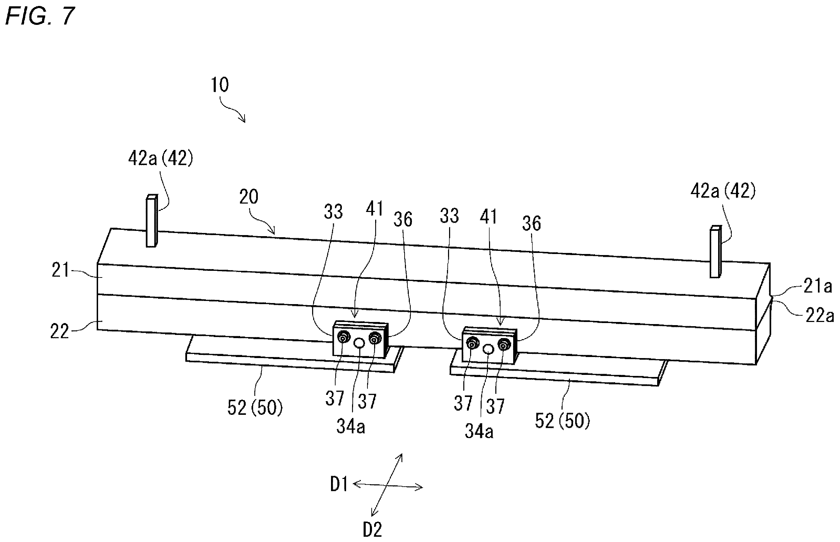

As illustrated in FIG. 7, the coating device 10 of the present embodiment includes at least one (two, in this example) fixing unit 41 and at least one (two, in this example) deforming unit 42.

The fixing unit 41 has the same configuration as the fixing functional unit 31 of the above Embodiment 1. The fixing unit 41 is attached to the back surface of the die head 20 by the fixing screw 37, and fixes the die head 20 to the base 50. In FIG. 7, only the base plate 52 of the base 50 is illustrated.

The deforming unit 42 is spaced apart from the fixing unit 41 in the first horizontal direction D1. The deforming unit 42 of the present embodiment is disposed more outward than the fixing unit 41, but is not limited thereto. The deforming unit 42 has a rod 42a fixed to the upper block 21 of the die head 20. The rod 42a is configured to be movable in the second horizontal direction D2 by means of a moving means (not illustrated). By moving the rod 42a in the second horizontal direction D2, the portion of the die head 20 where the rod 42a is disposed is deformed in the second horizontal direction D2. This can easily realize a desired clearance control. The rod 42a may be fixed to any portion of the upper block 21 or the lower block 22.

### <<Supplementary notes>>

The above description of embodiments discloses the following techniques.

### (Technique 1)

A coating device, comprising:
a die head having a discharge port for discharging a slurry to a base material, the discharge port extending in a first horizontal direction; and
a plurality of functional units spaced apart from each other in the first horizontal direction, wherein
each of the functional units can be switched to exhibit either one of a fixing function for fixing the die head to a base and a deforming function for deforming the die head in a second horizontal direction orthogonal to the first horizontal direction,
some of the functional units are configured to exhibit the fixing function, and
the remaining functional unit or units are configured to exhibit the deforming function.

### (Technique 2)

The coating device according to technique 1, wherein
the die head has an upper block and a lower block that are fixed to each other, and
the functional units are provided on at least one of the upper block and the lower block.

### (Technique 3)

The coating device according to technique 1 or 2, wherein the functional unit that exhibits the deforming function deforms the die head by pushing a back surface of the die head.

### (Technique 4)

The coating device according to any one of techniques 1 to 3, wherein
each of the functional units has a die base that is fixed to the base, and that includes a vertical wall portion provided with a first screw hole and a first long hole,
the functional unit that exhibits the fixing function further includes a fixing screw that is screwed via the first long hole into a second screw hole formed on a back surface of the die head, and
the functional unit that exhibits the deforming function further has a set screw that is screwed into the first screw hole, and that pushes the back surface of the die head.

### (Technique 5)

The coating device according to technique 4, wherein the set screw is a fine thread screw.

### (Technique 6)

The coating device according to technique 4 or 5, wherein
the functional unit further includes a plate provided between the die base and the back surface of the die head, and
the set screw pushes the back surface of the die head via the plate.

### (Technique 7)

The coating device according to technique 6, wherein the set screw pushes a central portion in the first horizontal direction of the plate.

### (Technique 8)

The coating device according to technique 6 or 7, wherein a constituent material of the plate has a higher Vickers hardness than a constituent material of the die head.

### (Technique 9)

The coating device according to any one of techniques 6 to 8, wherein
the plate has a second long hole that is formed at a position overlapping the first long hole, and that has a dimension in the first horizontal direction which is longer than the first long hole, and
the fixing screw is screwed into the second screw hole via the first long hole and the second long hole.

### (Technique 10)

The coating device according to any one of techniques 1 to 9, wherein, in the first horizontal direction, a dimension of the discharge port is 90% or more of a dimension of the die head.

### (Technique 11)

A coating device, comprising:
a die head having a discharge port extending in a first horizontal direction;
at least one fixing unit that is attached to a back surface of the die head, and that fixes the die head to the base; and
at least one deforming unit that is attached to the die head, and that is spaced apart from the fixing unit in the first horizontal direction, wherein
the deforming unit is configured to deform the die head in a second horizontal direction orthogonal to the first horizontal direction.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The present disclosure is applicable to a coating device.

### [Reference Signs List]

10: coating device
   20: die head
      21: upper block
         21a: tip lip
      22: lower block
         22a: tip lip
      23: shim
      24: discharge port
      25: manifold
      26: communication path
      27: second screw hole
   31: fixing functional unit (functional unit)
   32: deforming functional unit (functional unit)
      33: die base
         34: vertical wall portion
            34a: first screw hole
            34b: first long hole
         35: lateral plate portion
            35a: first key groove
      36: plate
         36a: second long hole
      37: fixing screw
      38: set screw
   41: fixing unit
   42: deforming unit
      42a: rod
50: base
   51: base body
   52: base plate
      52a: second key groove
60: key
70: roll
80: base material
90: slurry
D1: first horizontal direction
D2: second horizontal direction

## Claims

1. A coating device, comprising:
a die head having a discharge port for discharging a slurry to a base material, the discharge port extending in a first horizontal direction; and
a plurality of functional units spaced apart from each other in the first horizontal direction, wherein
each of the functional units can be switched to exhibit either one of a fixing function for fixing the die head to a base and a deforming function for deforming the die head in a second horizontal direction orthogonal to the first horizontal direction,
some of the functional units are configured to exhibit the fixing function, and
the remaining functional unit or units are configured to exhibit the deforming function.

2. The coating device according to claim 1, wherein
the die head has an upper block and a lower block that are fixed to each other, and
the functional units are provided on at least one of the upper block and the lower block.

3. The coating device according to claim 1 or 2, wherein the functional unit that exhibits the deforming function deforms the die head by pushing a back surface of the die head.

4. The coating device according to claim 1 or 2, wherein
each of the functional units has a die base that is fixed to the base, and that includes a vertical wall portion provided with a first screw hole and a first long hole,
the functional unit that exhibits the fixing function further includes a fixing screw that is screwed via the first long hole into a second screw hole formed on a back surface of the die head, and
the functional unit that exhibits the deforming function further has a set screw that is screwed into the first screw hole, and that pushes the back surface of the die head.

5. The coating device according to claim 4, wherein the set screw is a fine thread screw.

6. The coating device according to claim 4, wherein
the functional unit further includes a plate provided between the die base and the back surface of the die head, and
the set screw pushes the back surface of the die head via the plate.

7. The coating device according to claim 6, wherein the set screw pushes a central portion in the first horizontal direction of the plate.

8. The coating device according to claim 6, wherein a constituent material of the plate has a higher Vickers hardness than a constituent material of the die head.

9. The coating device according to claim 6, wherein
the plate has a second long hole that is formed at a position overlapping the first long hole, and that has a dimension in the first horizontal direction which is longer than the first long hole, and
the fixing screw is screwed into the second screw hole via the first long hole and the second long hole.

10. The coating device according to claim 1 or 2, wherein, in the first horizontal direction, a dimension of the discharge port is 90% or more of a dimension of the die head.

11. A coating device, comprising:
a die head having a discharge port extending in a first horizontal direction;
at least one fixing unit that is attached to a back surface of the die head, and that fixes the die head to a base; and
at least one deforming unit that is attached to the die head, and that is spaced apart from the fixing unit in the first horizontal direction, wherein
the deforming unit is configured to deform the die head in a second horizontal direction orthogonal to the first horizontal direction.
